# EUROPEAN PATENT APPLICATION

(11) **EP 2 698 395 A2**
(43) Date of publication of application: **19.02.2014**
(21) Application number: 12461547.7
(22) Date of filing: 13.09.2012
(51) Int. Cl.: C08J 3/20, C08J 3/22, E06B 3/20, B29C 47/00

(54) **A method for manufacturing of elongated multiwall profiles from polyvinyl chloride**

(30) Priority: 15.08.2012 PL 40038912
(71) Applicant: Future Sp. z o.o., 90-752 Lodz (PL)
(72) Inventor: Moscicki, Andrzej, 91-503 Lodz (PL); Mazurek, Przemyslaw, 94-007 Lodz (PL)
(74) Representative: Pawlowski, Adam

(57) **Abstract**

The object of the invention is a method for manufacturing of elongated multi-wall profiles from polyvinyl chloride, comprising the steps of preparing at least two mixes comprising powdered polyvinyl chloride in the amount of 82% by weight, a stabilizer in the amount of 3% by weight, chalk in the amount of 7% by weight, titanium white in the amount of 3% by weight and acrylic modifier in the amount of 5% by weight, mixing in a temperature of 120°C and cooling to the temperature of 35°C. From the mixes multi-wall profiles are extruded in a coextrusion process. The method further comprises the steps of preparing a basic mix comprising 82% of raw powdered polyvinyl chloride and preparing a treated mix comprising 82% of raw powdered polyvinyl chloride mixed with treated powdered polyvinyl chloride in a ratio of 1:10. The treated powdered polyvinyl chloride is prepared in such a way that to the raw powdered polyvinyl chloride silver nanoparticles are implanted such that the powdered polyvinyl chloride is subject to alternate operations of coating with a colloidal solution of silver nanoparticles having a size from 50nm to 60nm in isopropanol at a concentration of 1000ppm by weight and drying at a temperature below 70°C until the concentration of silver nanoparticles in the treated powdered polyvinyl chloride reaches a value from 120 ppm to 600 ppm by weight. From the treated mix the external layer having a thickness from 0,5mm to 1mm of at least part of the external walls of the profile is extruded.

## Description

The present invention relates to a method for manufacturing of elongated multiwall profiles from polyvinyl chloride, in particular for frames and sashes of windows or doors.

Extruded profiles from polyvinyl chloride (PVC) are widely used. The most popular are profiles used for construction of window or door frames and sashes. These profiles are made of a powdered raw material, which is melted and the melted mass is extruded via a die which forms it into the desired profiled shape.

In some uses it would be desirable to make profiles having antimicrobial properties. For example, it would be desirable to limit the growth of bacteria and other microbes on profiles of windows or doors used in health care facilities. These profiles can be coated by antimicrobial agents, but such coated profiles are prone to damage or wear of the antimicrobial coating. It would be better to implant the antimicrobial agent within the profile. However, so far there is no technology which would allow to efficiently implant silver nanoparticles to powdered polyvinyl chloride, as it easily agglomerates.

The aim of the present invention is to provide a method for manufacturing of profiles from polyvinyl chloride with a bactericidal agent based on metal nanoparticles, guaranteeing precise application of the agent within the profile to make the antimicrobial layer prone to scratches and wear, thereby providing the profile with long-lasting bactericidal properties, and which does not complicate the standard process of profile extrusion.

The object of the invention is a method for manufacturing of elongated multi-wall profiles from polyvinyl chloride, comprising the steps of preparing at least two mixes comprising powdered polyvinyl chloride in the amount of 82% by weight, a stabilizer in the amount of 3% by weight, chalk in the amount of 7% by weight, titanium white in the amount of 3% by weight and acrylic modifier in the amount of 5% by weight, mixing in a temperature of 120°C and cooling to the temperature of 35°C. From the mixes multi-wall profiles are extruded in a coextrusion process. The method further comprises the steps of preparing a basic mix comprising 82% of raw powdered polyvinyl chloride and preparing a treated mix comprising 82% of raw powdered polyvinyl chloride mixed with treated powdered polyvinyl chloride in a ratio of 1:10. The treated powdered polyvinyl chloride is prepared in such a way that to the raw powdered polyvinyl chloride silver nanoparticles are implanted such that the powdered polyvinyl chloride is subject to alternate operations of coating with a colloidal solution of silver nanoparticles having a size from 50nm to 60nm in isopropanol at a concentration of 1000ppm by weight and drying at a temperature below 70°C until the concentration of silver nanoparticles in the treated powdered polyvinyl chloride reaches a value from 120 ppm to 600 ppm by weight. From the treated mix the external layer having a thickness from 0,5mm to 1mm of at least part of the external walls of the profile is extruded.

The invention allows to obtain profiles from polyvinyl chloride, in which the external layer of at least part of the external walls silver nanoparticles are implanted uniformly; thanks to this, the profiles have permanent bactericidal properties, whilst the method does not introduce additional complications to the profile extrusion process itself, and thus can easily be adjusted to popular extrusion systems.

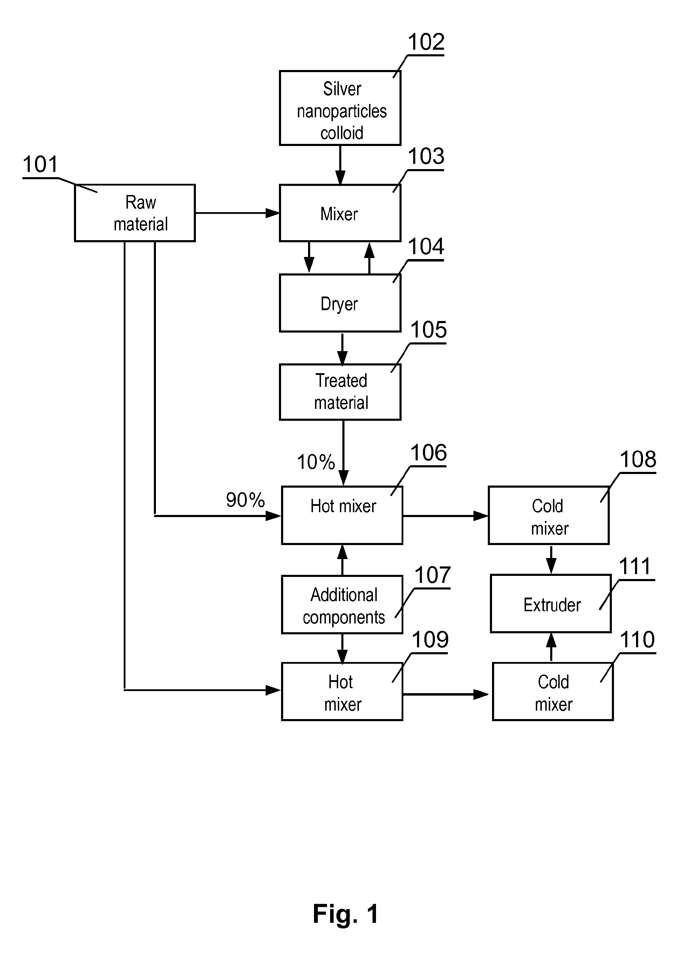

The invention is presented by means of exemplary embodiment on a drawing, in which Fig. 1 presents a diagram of a technological line for carrying out the process according to the invention.

Profiles from polyvinyl chloride, according to the invention, are made from a mix of raw material and treated material. The raw material is raw powdered polyvinyl chloride, supplied from the tank 101. The raw material is supplied to a mixer 103, where it is mixed with a colloidal nanosilver solution 102 in order to coat the material surface with the solution. The coated material is transported to a dryer 104, where, under a temperature below 70°C, liquid evaporates, leaving silver nanoparticles implanted on the material surface. The process of coating and drying is repeated until a desired concentration of silver nanoparticles is obtained on the granulate surface, wherein the desired concentration is from 120 ppm to 600ppm.

It has been found that a colloidal solution for the implantation of silver nanoparticles on the surface of powdered polyvinyl chloride should particularly contain a colloidal solution of silver nanoparticles having size from 50nm to 60nm in isopropanol at a concentration of 1000ppm. For example, the product NanoSilver Ip 1000 made by Amepox, Lodz, Poland, can be used. Use of a colloid based on isopropanol did not result in agglomeration of the powdered polyvinyl chloride.

The raw material from the tank 101 and the treated material from the tank 105 are next supplied to a hot mixer 106 at the ratio of 1:10, so as to obtain concentration of nanosilver in the final product at the level from 10 ppm to 50 ppm. Simultaneously, to the mixer 106 there are added from the tank 107 additional components of the mix for window profiles, such as to obtain a treated mix comprising:
- a mix of raw material and treated material: 82% by weight,
- a stabiliser: 3% by weight, for example the product NAFROSAFE 117CSR-5 made by CHEMSON, Austria
- chalk: 7% by weight, for example the product HYDROCARB 95T by Omya, Australia;
- titanium white: 3% by weight, for example the product KRONOS 2222 by Kronos, Norway;
- acrylic modifier: 5% by weight, for example the product FM50 by KANEKA, Belgium,

The above components are mixed in the hot mixer 106 at a temperature of 120°C and next they are moved to a cold mixer 108 for cooling the treated mix to a temperature of 35°C.

An equivalent process is performed in the hot mixer and in the cold mixer 110 to obtain a basic mix. Therefore, in the hot mixer the following mix is prepared in the temperature of 120°C:
- raw material: 82% of PVC S67
- a stabiliser: 3% by weight, for example the product NAFROSAFE 117CSR-5 made by CHEMSON, Austria
- chalk: 7% by weight, for example the product HYDROCARB 95T by Omya, Australia;
- titanium white: 3% by weight, for example the product KRONOS 2222 by Kronos, Norway;
- acrylic modifier: 5% by weight, for example the product FM50 by KANEKA, Belgium,

The mixed components are moved to the cold mixer 110 for cooling the basic mix to a temperature of 35°C.

The Basic mix from the mixer 110 and the treated mix from the mixer 108 is then fed to the extruder 111 with a coextrusion system, in which the melted mixes are pushed through a two-part die, which forms it into the desired profile shape, and next the profile is cooled.

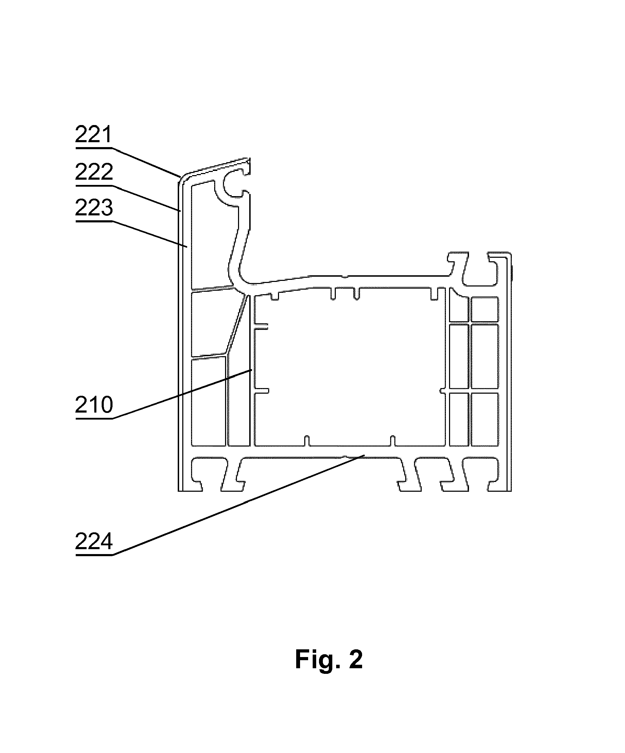

The die is used to form a profile shown in an exemplary embodiment of a profile for a window sash in Fig. 2. The profile comprises multiple walls, including internal walls 210 and external walls 221, 224. The internal walls are formed from the basic mix. At least part 221 of the external walls (for example, for a window profile: the external walls which are intended to be installed inside the building) are formed as double-layered walls, wherein the external surface 222 is formed from a treated mix and the internal surface 223 is formed from the basic mix. The other external walls 224 are formed from the basic mix.

Therefore, the external surface of the external walls, having a thickness of from 0,5mm to 1 mm, is formed from the treated mix, such that in the whole mass of the external layer nanosilver particles are implemented in concentration from 10 ppm to 50 ppm. Therefore, this layer is prone to wear and scratching up to the depth of that layer, which makes it much more durable in its microbial properties than profiles coated with liquid solutions of nanosilver. Moreover, use of nanosilver particles only in the external layer of the external walls increases the economic efficiency of profile manufacturing, as implanting of relatively expensive silver to the internal layers is avoided, where the bactericidal properties are not necessary.

### Example

100 kg of powdered polyvinyl chloride was taken from the raw material tank 101 and batched into the mixing tank 103, together with the colloidal solution Nanosilver Ip 1000. The material, coated with the solution, was transferred to the dryer chamber 104, with the inner temperature of 50°C for total drying. The dipping and drying cycles were repeated many times, until 12kg of the solution evaporated, which results in the implantation of 12 g of silver nanoparticles in 100 kg of the material, i.e. obtaining the concentration of 120 ppm. Afterwards, treated material and raw material were supplied to the mixer 106 at the ratio of 1:10, and after adding the components from the tank 107, a mix with nanosilver content of 10 ppm by weight was obtained. From that mix, in the extruder the external layer of external walls of the profiles for window sashes were formed.

## Claims

1. A method for manufacturing of elongated multi-wall profiles from polyvinyl chloride, comprising the steps of:
- preparing at least two mixes comprising powdered polyvinyl chloride in the amount of 82% by weight, a stabilizer in the amount of 3% by weight, chalk in the amount of 7% by weight, titanium white in the amount of 3% by weight and acrylic modifier in the amount of 5% by weight,
- mixing in a temperature of 120°C
- cooling to the temperature of 35°C,
- wherein from the mixes multi-wall profiles are extruded in a coextrusion process, **characterized in that** the method further comprises the steps of:
- preparing a basic mix comprising 82% of raw powdered polyvinyl chloride,
- preparing a treated mix comprising 82% of raw powdered polyvinyl chloride mixed with treated powdered polyvinyl chloride in a ratio of 1:10,
- wherein the treated powdered polyvinyl chloride is prepared in such a way that to the raw powdered polyvinyl chloride silver nanoparticles are implanted such that the powdered polyvinyl chloride is subject to alternate operations of coating with a colloidal solution of silver nanoparticles having a size from 50nm to 60nm in isopropanol at a concentration of 1000ppm by weight and drying at a temperature below 70°C until the concentration of silver nanoparticles in the treated powdered polyvinyl chloride reaches a value from 120 ppm to 600 ppm by weight,
- wherein from the treated mix the external layer having a thickness from 0,5mm to 1mm of at least part of the external walls of the profile is extruded.
